# EUROPEAN PATENT APPLICATION

(11) **EP 3 489 876 A1**
(43) Date of publication of application: **29.05.2019**
(21) Application number: 18208139.8
(22) Date of filing: 23.11.2018
(51) Int. Cl.: G06Q 20/20, G07G 1/00

(54) **COMMODITY REGISTRATION APPARATUS, CHECKOUT APPARATUS, AND INFORMATION PROCESSING METHOD**

(30) Priority: 27.11.2017 JP 2017226470
(71) Applicant: Toshiba TEC Kabushiki Kaisha, 141-8562 Tokyo (JP)
(72) Inventor: SUSAKI, Akiko, Shinagawa-ku,, Tokyo 141-8562 (JP); GOTANDA, Tsuyoshi, Shinagawa-ku,, Tokyo 141-8562 (JP); GOTOU, Chikashi, Shinagawa-ku,, Tokyo 141-8562 (JP); YOSHITOMI, Jun, Shinagawa-ku,, Tokyo 141-8562 (JP)
(74) Representative: Fédit-Loriot

(57) **Abstract**

In accordance with an embodiment, a commodity registration apparatus comprises a recognizing module configured to recognize commodities placed on a placement area; a first weighing machine configured to measure a first weight as a total weight of commodities placed on the placement area; a second weighing machine configured to measure a second weight as a total weight of registered commodities; and a registering module configured to register commodities recognized by the recognizing module as purchased commodities in response to a weight change amount of the second weight since the commodities are recognized by the recognizing module and the first weight when the commodities are recognized by the recognizing module are in a predetermined relationship after the commodities placed on the placement area are recognized by the recognizing module and the first weighing machine is in a state in which no measurement the commodity is made.

## Description

### FIELD

The present invention relates to the field of a checkout processing technology in general, and embodiments described herein relate in particular to a commodity registration apparatus, a checkout apparatus, and an information processing method.

### BACKGROUND

In a self-service type commodity registration apparatus that a customer operates to perform a purchase registration on a commodity, weight of the commodity, on which the purchase registration is performed, placed on a commodity placement area is measured. Then, by comparing an amount of increase of the weight with a standard weight of the commodity subjected to the purchase registration just now, whether the commodity subjected to the purchase registration is correctly placed on the above placement area can be confirmed.

However, there is a large difference in weight for each individual piece of fruits and vegetables. Therefore, a certain allowable range is set for the standard weight for the above comparison of the weight to prevent a case in which the commodity subjected to the purchase registration is correctly placed from being handled as an error. If the allowable range is large, there is a possibility that a commodity that is not subjected to the purchase registration cannot be detected when the commodity subjected to the purchase registration and the commodity that is not subjected to the purchase registration are placed on the placement area together. In other words, it is difficult to properly set the allowable range.

For this reason, it is desired to properly perform checking based on the weight even when the purchase registration is performed for commodities having large difference in the weight for each piece/item.

### SUMMARY OF INVENTION

To solve such problem, there is provided a commodity registration apparatus, comprising:
a recognizing module configured to recognize commodities placed on a placement area;
a first weighing machine configured to measure a first weight as a total weight of commodities placed on the placement area;
a second weighing machine configured to measure a second weight as a total weight of registered commodities; and
a registering module configured to register commodities recognized by the recognizing module as purchased commodities in response to a weight change amount of the second weight since the commodities are recognized by the recognizing module and the first weight when the commodities are recognized by the recognizing module are in a predetermined relationship after the commodities placed on the placement area are recognized by the recognizing module and the first weighing machine is in a standby state in which no measurement of the commodity is made.

Preferably, the recognizing module recognizes each of a plurality of commodities placed on the placement area, and
the registering module registers all of the plurality of commodities recognized by the recognizing module as purchased commodities in response to the weight change amount and the first weight when the commodities are recognized by the recognizing module are in a predetermined relationship.

Preferably still, the recognizing module recognizes the commodity based on features of an appearance of the commodity placed on the placement area.

Preferably yet, the recognizing module comprises a scanner.

Suitably, the recognizing module recognize commodities using image data and object recognition processing.

The present invention also relates to a checkout apparatus, comprising:
a recognizing module configured to recognize commodities placed on a placement area;
a first weighing machine configured to measure a first weight as a total weight of commodities placed on the placement area;
a second weighing machine configured to measure a second weight as a total weight of registered commodities;
a registering module configured to register commodities recognized by the recognizing module as purchased commodities in response to a weight change amount of the second weight since the commodities are recognized by the recognizing module and the first weight when the commodities are recognized by the recognizing module are in a predetermined relationship after the commodities placed on the placement area are recognized by the recognizing module and the first weighing machine is in a standby state in which no measurement of the commodity is made; and
a settlement module configured to perform settlement processing of commodities registered as purchased commodities by the registering module, wherein the settlement module does not perform the settlement processing when the registering module is in a standby state, until the weight change amount of the second weight since the commodities are recognized by the recognizing module and the first weight when the commodities are recognized by the recognizing module are in a predetermined relationship.

Preferably, the recognizing module recognizes each of a plurality of commodities placed on the placement area, and
the registering module registers all of the plurality of commodities recognized by the recognizing module as purchased commodities in response to the weight change amount and the first weight when the commodities are recognized by the recognizing module are in a predetermined relationship.

Preferably still, the recognizing module recognizes the commodity based on features of an appearance of the commodity placed on the placement area.

Preferably yet, the recognizing module comprises a scanner.

Suitably, the recognizing module recognize commodities using image data and object recognition processing.

Suitably still, the checkout apparatus further comprises:
a screen for displaying contents of recognized commodities for customer confirmation.

The present invention also concerns an information processing method by a commodities registration apparatus comprising a first weighing machine which measures a first weight as a total weight of commodities placed on a placement area, and a second weighing machine which measures a second weight as a total weight of registered commodities, comprising:
recognizing commodities placed on the placement area; and
registering commodities recognized by the recognizing module as purchased commodities in response to a weight change amount of the second weight since the commodities are recognized by the recognizing module and the first weight when the commodities are recognized by the recognizing module are in a predetermined relationship after the commodities placed on the placement area are recognized by the recognizing module and the first weighing machine is in a standby state in which no measurement of the commodity is made.

Preferably, the information processing method further comprises:
generating a receipt containing a list of commodities.

Preferably still, the information processing method further comprises:
displaying contents of recognized commodities on a screen for customer confirmation.

Preferably yet, the information processing method further comprises:
recognizing each of a plurality of commodities placed on the placement area, and
registering all of the plurality of commodities recognized as purchased commodities in response to the weight change amount and the first weight when the commodities are recognized are in a predetermined relationship.

Suitably, the information processing method further comprises:
recognizing the commodity based on features of an appearance of the commodity placed on the placement area.

Suitably still, in the information processing method, the recognizing comprises using a scanner.

Suitably yet, in the information processing method, the recognizing comprises using image data and object recognition processing.

The present invention further relates to a non-transitory computer readable medium storing a program causing a computer to execute the information processing method described above.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a perspective view illustrating an appearance of a checkout apparatus according to an embodiment;
Fig. 2 is a block diagram illustrating a circuit configuration of main portions of the checkout apparatus shown in Fig. 1;
Fig. 3 is a flowchart depicting an information processing executed by a CPU shown in Fig. 2; and
Fig. 4 is a flowchart depicting an information processing executed by the CPU shown in Fig. 2.

### DETAILED DESCRIPTION

In accordance with an embodiment, a commodity registration apparatus comprises a recognizing module configured to recognize commodities placed on a placement area; a first weighing machine configured to measure a first weight as a total weight of commodities placed on the placement area; a second weighing machine configured to measure a second weight as a total weight of registered commodities; and a registering module configured to register commodities recognized by the recognizing module as purchased commodities in response to that a weight change amount of the second weight since the commodities are recognized by the recognizing module and the first weight when the commodities are recognized by the recognizing module are in a predetermined relationship after the commodities placed on the placement area are recognized by the recognizing module and the first weighing machine is in a state in which no measurement of the commodity is made.

An example of an embodiment is described below with reference to the accompanying drawings. In the present embodiment, a checkout apparatus is described which has a function of a commodity registration apparatus for registering a purchased commodity and a settlement apparatus for settling a price of the purchased commodity that is registered.

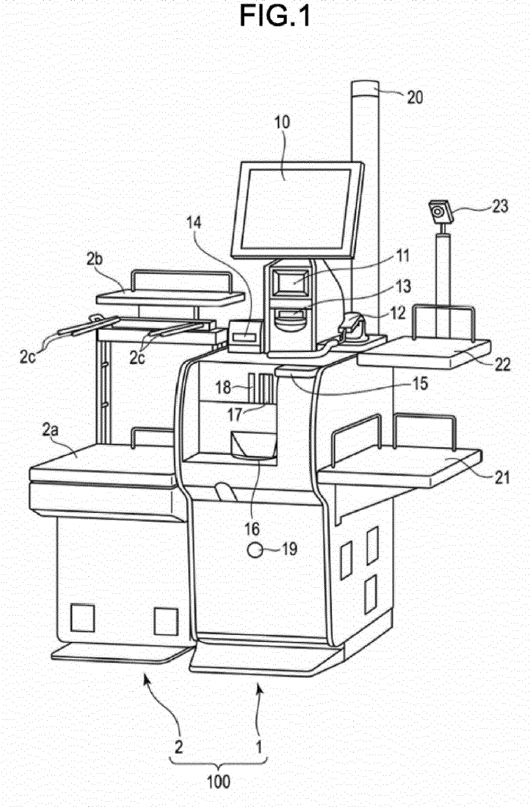

Fig. 1 is a perspective view illustrating an appearance of a checkout apparatus 100 according to the present embodiment. The checkout apparatus 100 of the present embodiment is also referred to as a self-checkout apparatus, a self-checkout type POS (point of sale) terminal, or a self-registration apparatus. The checkout apparatus 100 is operated by a customer. Therefore, the customer is an operator of the checkout apparatus 100. However, a store clerk may be the operator of the checkout apparatus 100.

The checkout apparatus 100 includes a main body 1 and a weighing unit 2.

The main body 1 includes a touch panel 10, a scanner window 11, a hand-held scanner 12, a receipt issuing port 13, a card insertion slot 14, a coin insertion tray 15, a reception tray 16, a bill insertion slot 17, a bill dispensing port 18, a human sensor 19, a patrol lamp 20, tables 21 and 22 and a camera 23.

The touch panel 10 displays various screens for notifying the operator of various kinds of information. A part of the various screens constitutes a GUI (Graphical User Interface), and the touch panel 10 receives a touch operation for operating the GUI. The scanner window 11 is formed by covering an opening formed in the main body 1 with transparent resin, glass, or the like. With the scanner window 11, a commodity held by the operator in front of the scanner window 11 can be scanned by a fixed scanner disposed in the main body 1. The fixed scanner is described later.

The hand-held scanner 12 reads a barcode attached to the commodity and outputs information indicated by the barcode.

The receipt issuing port 13 is a slit-like opening for discharging a receipt to the outside of the main body 1.

The card insertion slot 14 is a slit-like opening for inserting the card into the main body 1 and discharging the card to the outside of the main body 1.

The coin insertion tray 15 receives coins deposited by an operator for settlement. An opening is formed at the bottom surface of the coin insertion tray 15, and coins received by the coin insertion tray 15 are inserted into the main body 1 from the opening.

The reception tray 16 receives coins to be dispensed from the main body 1 as a change.

The bill insertion slot 17 is a slit-like opening for receiving bills deposited by the operator for settlement to the inside of the main body 1.

The bill dispensing port 18 is a slit-like opening for dispensing bills as a change from the main body 1. The bill dispensing port 18 holds the bill in a state in which a part thereof projects to the outside of the main body 1.

The human sensor 19 detects the presence of a human at a position where the operator stands to operate the checkout apparatus 100. In other words, the human sensor 19 detects a human who is the operator of the checkout apparatus 100 when the human is present in front of the checkout apparatus 100. The human sensor 19 is, for example, a well-known device using an infrared sensor, a light sensor, or the like.

The patrol lamp 20 performs a lighting operation for notifying a status of the checkout apparatus 100.

The table 21 is used as a placement area for an unregistered commodity.

The table 22 is used as a placement area of a commodity for purchase registration using an object recognition processing described later.

The camera 23 photographs the commodity placed on the table 22 from the upper side of the commodity, and generates image data indicating an appearance of the commodity.

The weighing unit 2 includes tables 2a and 2b for placing a registered commodity and an arm 2c for hanging a bag in which the registered commodity is accommodated. The weighing unit 2 measures a total weight of the commodity placed on the tables 2a and 2b and the commodity put in the bag hung on the arm 2c. In other words, the weighing unit 2 measures the total weight of the commodity transferred to the weighing unit 2 as the registered commodity. The weighing unit 2 is an example of a second weighing machine.

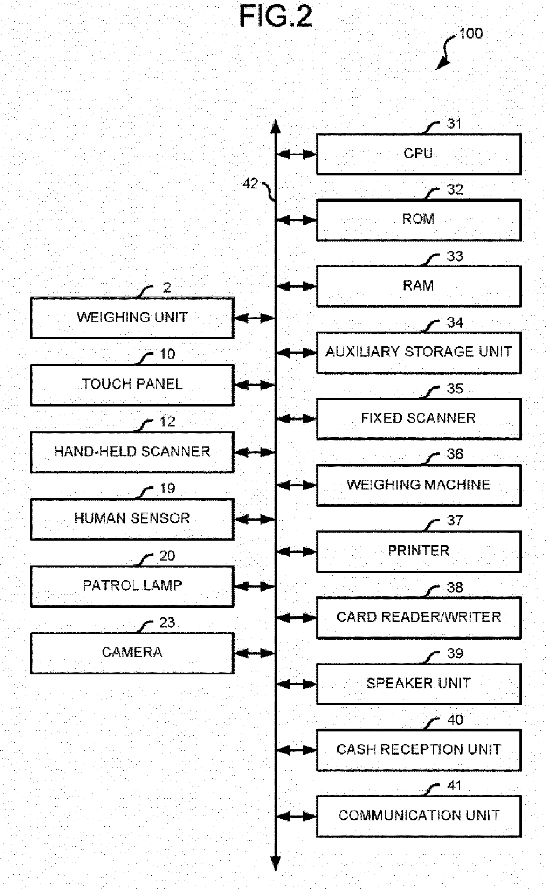

Fig. 2 is a block diagram illustrating a circuit configuration of main portions of the checkout apparatus 100. In Fig. 2, the same components as those in Fig. 1 are denoted by the same reference numerals, and a detailed description thereof is omitted.

As shown in Fig. 2, the checkout apparatus 100 includes a CPU (Central Processing Unit) 31, a ROM (Read-Only Memory) 32, a RAM (Random-Access Memory) 33, an auxiliary storage unit 34, a fixed scanner 35, a weighing machine 36, a printer 37, a card reader/writer 38, a speaker unit 39, a cash reception unit 40 and a communication unit 41 in addition to the weighing unit 2, the touch panel 10, the hand-held scanner 12, the human sensor 19, the patrol lamp 20 and the camera 23 also shown in Fig. 1. The CPU 31, the ROM 32, the RAM 33, the auxiliary storage unit 34, the fixed scanner 35, the weighing machine 36, the printer 37, the card reader/writer 38, the speaker unit 39, the cash reception unit 40 and the communication unit 41 are arranged in the main body 1. The weighing unit 2, the touch panel 10, the hand-held scanner 12, the CPU 31, the ROM 32, the RAM 33, the auxiliary storage unit 34, the fixed scanner 35, the weighing machine 36, the printer 37, the card reader/writer 38, the speaker unit 39, the cash reception unit 40 and the communication unit 41 are connected via a transmission path 42. Thus, the CPU 31, the ROM 32, the RAM 33, and the auxiliary storage unit 34 constitute a computer that executes an information processing for controlling the checkout apparatus 100.

In addition to the components shown in Fig. 1 and Fig. 2, the checkout apparatus 100 may have other components included in another known checkout apparatus of the same type or any other components.

The CPU 31 acts as a central part of the computer. The CPU 31 executes an operating system and an application program stored in the ROM 32 and the auxiliary storage unit 34 to execute an information processing, thereby controlling each section to realize various functions of the checkout apparatus 100.

The ROM 32 acts as a main storage portion of the computer. The ROM 32 stores the operating system and the application program. In some cases, the ROM 32 stores data to be referred to by the CPU 31 to perform various processing.

The RAM 33 acts as a main storage portion of the computer. The RAM 33 stores data to be referred to when the CPU 31 performs various processing. Furthermore, the RAM 33 is used as a so-called work area for storing data temporarily used by the CPU 31 to perform various processing.

The auxiliary storage unit 34 acts as an auxiliary storage portion of the computer. The auxiliary storage unit 34 stores data to be used by the CPU 31 to perform various processing or data generated in the processing executed by the CPU 31. The auxiliary storage unit 34 may also store the application program. The auxiliary storage unit 34 may be, for example, an EEPROM (Electric Erasable Programmable Read-Only Memory), an HDD (Hard Disk Drive), an SSD (Solid State Drive), or the like.

The fixed scanner 35 photographs a commodity held in front of the scanner window 11 and then identifies the barcode attached to the commodity by an image processing. Then, the fixed scanner 35 outputs information indicated by the identified barcode to the CPU 31. The fixed scanner 35 may be a known device of another type that uses reflection of laser beam to identify the barcode. The fixed scanner 35 may have a function of recognizing the commodity using an object recognition technology based on features included in the image of the commodity.

The weighing machine 36 measures the weight of the commodity placed on the table 22. The table 22 corresponds to the placement area as described later. Therefore, weighing machine 36 is an example of a first weighing machine that measures the total weight of commodities placed on the placement area.

The printer 37 includes a receipt printer and a journal printer. The receipt printer issues various kinds of vouchers by printing various kinds of information on a receipt paper. Various kinds of vouchers include a receipt indicating contents of a commercial transaction and the like. The voucher issued by the receipt printer is discharged from the receipt issuing port 13 to the outside of the main body 1. The journal printer prints journal data including information to be printed on the receipt paper by the receipt printer on a journal paper. The journal paper is held in the main body 1 unless it is taken out by a maintenance person. The journal data is stored in the auxiliary storage unit 34 in association with a transaction code for identifying each transaction, and may be printed on the receipt paper by a receipt printer as required. In this case, there is no need to provide the journal printer in the printer 37.

The card reader/writer 38 reads data recorded on a card inserted to the card insertion slot 14 by the customer. The card reader/writer 38 writes data to the card. The card may be a point card, an IC card for settlement and the like. The card reader/writer 38 discharges the card after a necessary processing is performed from the card insertion slot 14 to the outside of the main body 1. The card insertion slot 14 holds the card to be discharged in a state in which a part thereof protrudes to the outside of the main body 1. The speaker unit 39 includes a speaker and a driving circuit. The speaker unit 39 outputs a sound under the control of the CPU 31.

The cash reception unit 40 counts the coins inserted into the main body 1 from the opening of the coin insertion tray 15 by denomination, and then accommodates them. The cash reception unit 40 dispenses the coins as the change to the reception tray 16. The cash reception unit 40 counts the bills inserted from the bill insertion slot 17 by denomination, and then accommodates them. The cash reception unit 40 dispenses the bills as the change from the bill discharging port 18.

The communication unit 41 is connected to an in-store network such as a LAN (Local Area Network) or a communication network such as the Internet to communicate with any device such as a POS server.

The transmission path 42 includes an address bus, a data bus, a control signal line, and the like, and transmits data and a control signal transmitted and received between the connected sections.

Next, the operation of the checkout apparatus 100 configured as described above is described.

If an operation mode in which a checkout processing for a shopping by a customer is performed in response to an operation of the customer is set in the checkout apparatus 100, the information processing described below is executed.

The ROM 32 or the auxiliary storage unit 34 stores an information processing program for realizing an information processing described later as one of the application programs. The information processing program may be stored in the ROM 32 or the auxiliary storage unit 34 at the time of transferring hardware of the checkout apparatus 100 or may be transferred separately from the above hardware. In the latter case, the information processing program is recorded on a removable recording medium such as a magnetic disk, a magneto-optical disk, an optical disk, a semiconductor memory, etc., or is transferred via a network. In the latter case, for example, the information processing program is provided as a version upgrade program, and is written in the auxiliary storage unit 34 by the CPU 31 in response to a manual operation. The information processing program is used by replacing it with another information processing program of the same type already stored in the ROM 32 or the auxiliary storage unit 34.

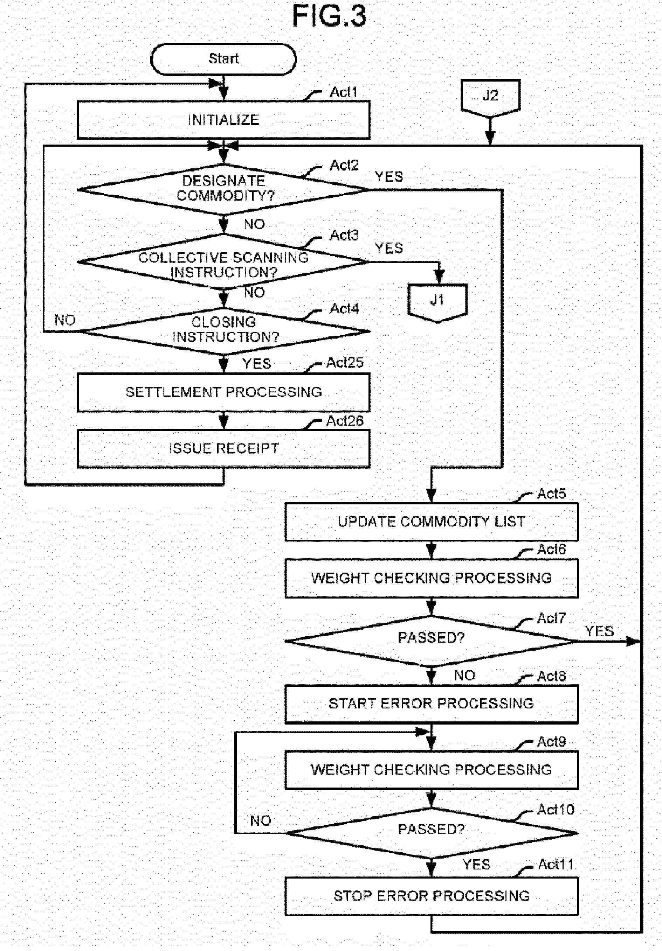

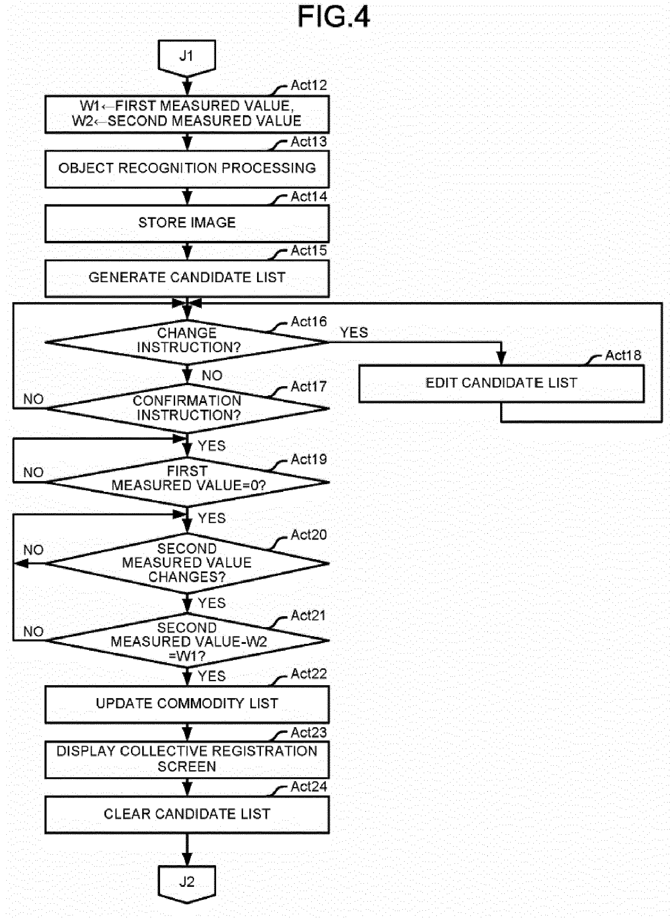

Fig. 3 and Fig. 4 are flowcharts depicting an information processing executed by the CPU 31. The content of the processing described below is merely an example, and various processing capable of achieving the same result can be appropriately used.

In Act 1, the CPU 31 performs an initialization processing such as clearing a commodity list. The commodity list is a list of commodities to be purchased in one transaction and is stored in the RAM 33 or the auxiliary storage unit 34.

In Act 2, the CPU 31 determines whether or not a commodity on which a purchase registration is performed is designated. Then, if no commodity is designated, the CPU 31 determines No, and proceeds to the processing in Act 3.

In Act 3, the CPU 31 determines whether or not a collective scanning is instructed. Then, if the collective scanning is not instructed, the CPU 31 determines No, and proceeds to the processing in Act 4.

In Act 4, the CPU 31 determines whether or not closing of the purchase registration is instructed. Then, if the closing of the purchase registration is not instructed, the CPU 31 determines No, and returns to the processing in Act 2.

Thus, the CPU 31 stands by until the designation of the commodity, the collective scanning instruction or a closing instruction is performed in Act 2 to Act 4.

The customer picks up a commodity he/she wants to purchase from a sales floor and brings the commodity to a checkout corner. The customer stands in front of the checkout apparatus 100 installed in the checkout corner to perform a registration operation for performing purchase registration on the commodity. The registration operation refers to an operation of holding a barcode attached to the purchased commodity in front of the scanner window 11, an operation of bringing the hand-held scanner 12 close to the barcode, or an operation of touching the touch panel 10 to designate the purchased commodity. If the fixed scanner 35 has a function of recognizing a commodity using the object recognition technology based on features included in an image of the commodity, the registration operation also includes an operation of holding the commodity such as fruits and vegetables to which no barcode is attached in front of scanner window 11. For the commodity such as fruits and vegetables to which no barcode is attached, the customer may place a commodity on the table 22 and perform a predetermined operation for instructing a collective scanning. In the case of performing the collective scanning, the customer may place a plurality of commodities side by side on the table 22.

The registration operation different from the operation for instructing the collective scanning is to designate a single commodity as a purchased commodity. Therefore, if any one of these registration operations is performed, the CPU 31 determines Yes in Act 2, and proceeds to the processing in Act 5.

In Act 5, the CPU 31 updates the commodity list. Specifically, the CPU 31 adds a commodity code for identifying the commodity designated by the above registration operation to the commodity list.

In Act 6, the CPU 31 performs a weight checking processing. The weight checking processing may be the same as a processing executed by the existing checkout apparatus of the same type, or may be any other processing. For example, the CPU 31 stands by until a measured value by the weighing unit 2 changes. Then, the CPU 31 checks whether or not a difference between a measured value after the change and a measured value when the commodity list is updated just now is within a determined allowable range in association with the commodity code added to the commodity list. If the measured value by the weighing unit 2 or the weighing machine 36 changes, the CPU 31 sets the measured value when the measured value becomes constant over a predetermined period of time as the measured value after the change.

In Act 7, the CPU 31 determines whether or not the result of the weight checking processing is positive. Then, if the result is not positive, the CPU 31 determines No in Act 7, and proceeds to the processing in Act 8.

In Act 8, the CPU 31 starts an error processing. The error processing is, for example, a processing of notifying the customer and the store clerk that the commodity subjected to the purchase registration just before is different from the commodity transferred to the weighing unit 2 side. Any content of the error processing may be used; however, it is assumed that the error processing is a processing capable of controlling to perform one or more of operations such as lighting the patrol lamp 20 to issue a warning, displaying a warning screen on the touch panel 10, or outputting a warning sound or a warning voice from the speaker unit 39.

In Act 9, the CPU 31 performs the weight checking processing again in the same manner as in Act 6.

In Act 10, the CPU 31 determines whether or not the result of the weight checking processing in Act 9 is positive. Then, if the result of the weight checking processing is not positive, the CPU 31 determines No and returns to the processing in Act 9.

Thus, the CPU 31 repeats the processing in Act 9 and Act 10 until the result of the weight checking processing is positive. Then, if the result of the weight checking processing is positive, the CPU 31 determines Yes in Act 10 and proceeds to the processing in Act 11.

In Act 11, the CPU 31 stops the error processing started in Act 8. Thereafter, the CPU 31 returns to the standby state in Act 2 to Act 4. If the result of the weight checking processing in Act 6 is positive, the CPU 31 determines Yes in Act 7. In this case, the CPU 31 returns to the standby state in Act 2 to Act 4 without executing the processing in Act 8 to Act 11.

When returning to the standby state in Act 2 to Act 4 from Act 7 or Act 11, the CPU 31 displays a registration commodity screen for a customer to confirm contents of the commodity list on the touch panel 10.

If a predetermined operation for instructing the collective scanning is performed, the CPU 31 determines Yes in Act 3, and proceeds to the processing in Act 12 in Fig. 4.

In Act 12, the CPU 31 substitutes a first measured value for a variable W1 and a second measured value for a variable W2, respectively. Here, the first measured value is measured by the weighing machine 36 at this time point. The second measured value is measured by the weighing unit 2 at this time point. Specifically, the variable W1 indicates the weight of a commodity placed on the table 22 before the start of the collective scanning. The variable W2 indicates the weight of a commodity to be weighed by the weighing unit 2 before the start of the collective scanning, i.e., the weight of a commodity after the purchase registration before the start of the collective scanning.

In Act 13, the CPU 31 performs the object recognition processing on the image data obtained with the camera 23. Specifically, the CPU 31 specifies a range in which the commodity is reflected in the image indicated by the image data. If a plurality of commodities is placed side by side on the table 22, the CPU 31 specifies a plurality of ranges in which the plurality of commodities is reflected, respectively. Then, the CPU 31 extracts a feature amount of the appearance of the commodity reflected in the specified range to recognize the commodity based on the feature amount. Thus, the CPU 31 recognizes the commodity placed in an area on the table 22 as the placement area. In other words, since the CPU 31 executes the information processing by executing the information processing program, the computer with the CPU 31 as the central part functions as a recognizing module for performing the above recognition.

In Act 14, the CPU 31 stores at least a part of the image data obtained with the camera 23 which is used for the object recognition processing in the auxiliary storage unit 34. At this time, the CPU 31 can manage the stored image data in association with a transaction code for identifying a transaction being processed at present.

In Act 15, the CPU 31 generates a candidate list as a list of commodities recognized by the object recognition processing. The CPU 31 stores the generated candidate list in the RAM 33 or the auxiliary storage unit 34.

In Act 16, the CPU 31 determines whether or not a change instruction is issued. Then, if the change instruction is not issued, the CPU 31 determines No, and proceeds to the processing in Act 17.

In Act 17, the CPU 31 determines whether or not a confirmation instruction is issued. Then, if the confirmation instruction is not issued, the CPU 31 determines No, and returns to the processing in Act 16.

Thus, the CPU 31 stands by until the change instruction in Act 16 or the confirmation instruction in Act 17 is issued. When entering the standby state, the CPU 31 displays a candidate commodity screen for a customer to confirm contents of the candidate list on the touch panel 10. The candidate commodity screen may be displayed together with the registration commodity screen or in place of the registration commodity screen.

The customer determines whether or not the candidate list correctly indicates the commodities placed on the table 21 according to the screen displayed on the touch panel 10. If there is a commodity that is mistakenly recognized, an instruction for changing the recognition result of the commodity to one of the other candidate commodities by the object recognition operation is issues. In response to this, the CPU 31 determines Yes in Act 16 and proceeds to the processing in Act 18.

In Act 18, the CPU 31 edits the candidate list in response to the above instruction. Then, the CPU 31 returns to the standby state in Act 16 and Act 17.

If it is determined that the candidate list correctly indicates the commodities placed on the table 21, the customer performs a predetermined operation for issuing the confirmation instruction. Thus, the CPU 31 determines Yes in Act 17 and proceeds to the processing in Act 19. At this time, the CPU 31 may control to perform a guidance operation such as displaying a guidance screen on the touch panel 10 for prompting to remove all the commodities placed on the table 21 to the weighing unit 2.

In Act 19, the CPU 31 stands by until the first measured value becomes "0". In other words, the CPU 31 stands by until all the commodities placed on the table 21 are removed from the table 21. If there is a possibility that an error occurs in the measured value of the weighing unit 2, the CPU 31 stands by until the first measured value falls within a predetermined range around "0".

If the confirmation instruction is issued, the customer transfers all the commodities placed on the table 21 to the weighing unit 2. If the operation is completed, the first measured value becomes "0". Thus, the CPU 31 determines Yes in Act 19, and proceeds to the processing in Act 20.

In Act 20, the CPU 31 stands by until the second measured value changes.

In general, the customer sequentially removes the commodity placed on the table 21 to the weighing unit 2. Therefore, if the first measured value becomes "0", the last commodity is removed from the table 21. Therefore, if the second measured value changes thereafter, the last commodity is transferred to the weighing unit 2. However, there is no guarantee that the customer must do such work. Therefore, if the second measured value changes, the CPU 31 determines Yes in Act 20 and proceeds to the processing in Act 21.

In Act 21, the CPU 31 determines whether or not a value obtained by subtracting the variable W2 from the second measured value after change is coincident with the variable W1. In other words, the CPU 31 determines whether or not a change amount of the weight of the commodity measured by the weighing unit 2 since the object recognition operation is coincident with the weight of the commodity placed on the table 22 at the time of the object recognition operation.

It is assumed that the customer removes the last remaining commodity on the table 21 while holding the commodity removed from the table 21 in hand, and then places one of the two commodities held in hand on the weighing unit 2. In such a case, even if the second measured value changes after the first measured value becomes "0", the difference between the second measured value after the change and the variable W2 is not coincident with the variable W1. Therefore, in such a case, the CPU 31 determines No in Act 21 and returns to the standby state in Act 20. At this time, the CPU 31 controls to perform a warning operation such as displaying a warning screen on the touch panel 10 to warn that not all the commodities removed from the table 21 are properly transferred to the weighing unit 2.

If the customer correctly transfers all the commodities removed from the table 21 to the weighing unit 2, the difference between the second measured value after the change and the variable W2 is coincident with the variable W1. In this case, the CPU 31 determines Yes in Act 21 and proceeds to the processing in Act 22. In a case in which there is a possibility that an error may occur between the measured value by the weighing unit 2 and the measured value by the weighing machine 36, the CPU 31 determines the allowable range from a predetermined margin and the variable W1 in consideration of the error. Then, in Act 21, the CPU 31 determines whether or not the difference between the second measured value after the change and the variable W2 is within the allowable range.

In Act 22, the CPU 31 updates the commodity list. Specifically, the CPU 31 adds all the commodity codes of the commodities included in the candidate list to the commodity list. At this time, the CPU 31 updates the registration commodity screen to reflect the update of the commodity list. If the CPU 31 displays the candidate commodity screen in place of the registration commodity screen, the display of the registration commodity screen updated as described above is resumed.

In Act 23, the CPU 31 displays a collective registration screen for the customer to confirm the result of the collective registration by the object recognition operation on the touch panel 10. The collective registration screen shows contents of the candidate list and informs the customer that the purchase registration has been performed on the commodities included in the candidate list. It is preferable that the collective registration screen is displayed together with the registration commodity screen for comparison and confirmation. However, the collective registration screen may be temporarily displayed instead of the registration commodity screen.

In Act 24, the CPU 31 clears the candidate list. After that, the CPU 31 returns to the standby state in Act 2 to Act 4 in Fig. 3.

As described above, by executing the information processing shown in Fig. 4, the CPU 31 determines that the weighing machine 36 as the first weighing machine is in a state in which it does not weigh the commodity when Yes is determined in Act 19. When Yes is determined in Act 21, the CPU 31 determines that the change amount of the second measured value since the commodity is recognized and the first measured value at the time at which the commodity is recognized are in a predetermined relationship as "coincident". Then, under the above situation, the CPU 31 registers the recognized commodity as the purchased commodity in Act 22. Thus, the CPU 31 executes the information processing program to execute the information processing, and in this way, the computer with the CPU 31 as the central part functions as a registering module for performing the above-mentioned purchase registration.

The customer performs the commodity designation operation and the collective scanning operation appropriately to add the commodity code of all the purchased commodities to the commodity list. As a result, the purchase registration of all the purchased commodities is performed. If the purchase registration of all the purchased commodity is completed, the customer issues the closing instruction by performing a predetermined operation. In response to this, the CPU 31 determines Yes in Act 4 in Fig. 3, and proceeds to the processing in Act 25.

In Act 25, the CPU 31 performs a settlement processing for settling the price of the commodities on which the purchase registration has been performed. Specifically, the CPU 31 calculates a sum of the sales prices of all the commodities identified by the commodity codes included in the commodity list, and performs a discount processing on the sum as required to calculate a settlement amount. Then, the CPU 31 settles the settlement amount by a known processing using the cash, the credit card, the debit card, the electronic money, points, or the like. Thus, the CPU 31 performs the settlement processing; however, in the standby state in Act 20 and Act 21, the settlement processing is not performed. Therefore, the CPU 31 executes the information processing program to execute the information processing, and in this way, the computer with the CPU 31 as the central part functions as a settlement module.

In Act 26, the CPU 31 issues a receipt. Specifically, the CPU 31 generates a receipt image containing a list of commodities, a settlement result, and the like, and controls the printer 37 to print the receipt image. After that, the CPU 31 returns to the processing in Act 1 to prepare to start the processing relating to a next new transaction.

As described above, according to the checkout apparatus 100, the commodity that is placed on the table 22 and scanned is added to the commodity list when the commodity is transferred to the weighing unit 2. Here, in the checkout apparatus 100, that the scanned commodity is transferred to the weighing unit 2 is determined based on the change in the measured values by the weighing unit 2 and the weighing machine 36. Therefore, that the scanned commodity is transferred to the weighing unit 2 is not actually detected. However, when the scanned commodity is not transferred to the weighing unit 2, if a commodity different from the scanned commodity is transferred to the weighing unit 2, or if a commodity that is not scanned yet is transferred together with the scanned commodity, it is unlikely that the weight of the scanned commodity is coincident with the change amount of the measured value by the weighing unit 2. Even in a case in which a plurality of commodities is scanned at the same time, when another commodity is transferred to the weighing unit 2 in place of some of the plurality of commodities, it is unlikely that the weight of the scanned commodity is coincident with the change amount of the measured value by the weighing unit 2. Therefore, when these behaviors are made, it is not determined that the scanned commodity is transferred to the weighing unit 2. Moreover, since the weight check is to compare the measurement result by the weighing machine 36 and the measurement result by the weighing unit 2, the difference in weight per solid of the commodity has no influence on the accuracy of the check. Thus, according to the checkout apparatus 100, it is possible to carry out the weight check properly even for purchase registration of the commodities having a large difference in weight for each solid.

According to the checkout apparatus 100, when a plurality of commodities is placed side by side on the table 22, the plurality of commodities is collectively recognized. For this reason, the work load of the customer can be reduced as compared with the case in which the commodities need to be placed on the table 22 one by one to be scanned. According to the checkout apparatus 100, if the purchase registration of the scanned commodity placed on the table 22 is not completed, the settlement processing is not performed. Therefore, under the situation that the commodity placed on the table 22 and scanned is not correctly transferred to the weighing unit 2, the settlement cannot be completed. Thus, it is possible to prevent an unfair behavior such as transferring the commodity on which the purchase registration is not performed to the weighing unit 2 together with the scanned commodity from being carried out.

According to the checkout apparatus 100, the object recognition technology is used for recognizing the commodity placed on the table 22. For this reason, there is no restriction on the use such as "the commodity needs to be placed on the table 22 in such a manner that the barcode thereon can be photographed by the camera 23", thereby reducing the burden of the work of the customer.

According to the checkout apparatus 100, since the image used for the object recognition for collective registration is stored in association with the transaction code, when it is suspected that the purchase registration by the collective registration is not performed correctly, it is possible to perform confirmation afterwards by referring to the stored image.

In this embodiment, the following various modifications are made.

Only one commodity may be placed on the table 22 so that only the one commodity is recognized.

The recognition of the commodity placed on the table 22 may be performed by a technology not based on the features of the appearance of the commodity, such as scanning a barcode attached to the commodity.

A part of the information processing shown in Fig. 3 and Fig. 4 may be executed by a processor other than the CPU 31. For example, the object recognition processing in Act 13 in Fig. 4 is an example of suitable processing executed by another processor.

A part or all of the above functions realized by the CPU 31 performing a control processing may be realized by hardware such as a logic circuit for executing the information processing which is not based on a program. Each of the above-described functions may also be realized by combining software control with the hardware such as the above logic circuit.

The above embodiment can also be applied to a semi-self type checkout system provided with a registration device used by a store clerk to perform the registration operation of the commodity and a checkout device used by a customer to perform the checkout operation. In this case, the semi-self type checkout system is a system including a registration device which is a device in which the settlement module is omitted in the checkout device 100, and an checkout device provided with the settlement module.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention.

## Claims

1. A commodity registration apparatus, comprising:
a recognizing module configured to recognize commodities placed on a placement area;
a first weighing machine configured to measure a first weight as a total weight of commodities placed on the placement area;
a second weighing machine configured to measure a second weight as a total weight of registered commodities; and
a registering module configured to register commodities recognized by the recognizing module as purchased commodities in response to a weight change amount of the second weight since the commodities are recognized by the recognizing module and the first weight when the commodities are recognized by the recognizing module are in a predetermined relationship after the commodities placed on the placement area are recognized by the recognizing module and the first weighing machine is in a standby state in which no measurement of the commodity is made.

2. The commodity registration apparatus according to claim 1, wherein
the recognizing module recognizes each of a plurality of commodities placed on the placement area, and
the registering module registers all of the plurality of commodities recognized by the recognizing module as purchased commodities in response to the weight change amount and the first weight when the commodities are recognized by the recognizing module are in a predetermined relationship.

3. The commodity registration apparatus according to claim 1 or 2, wherein
the recognizing module recognizes the commodity based on features of an appearance of the commodity placed on the placement area.

4. The commodity registration apparatus according to any one of claims 1 to 3, wherein the recognizing module comprises a scanner.

5. The commodity registration apparatus according to any one of claims 1 to 4, wherein the recognizing module recognize commodities using image data and object recognition processing.

6. A checkout apparatus, comprising:
The commodity registration apparatus according to any one of claims 1 to 5; and
a settlement module configured to perform settlement processing of commodities registered as purchased commodities by the registering module, wherein the settlement module does not perform the settlement processing when the registering module is in a standby state, until the weight change amount of the second weight since the commodities are recognized by the recognizing module and the first weight when the commodities are recognized by the recognizing module are in a predetermined relationship.

7. The checkout apparatus according to claim 6, further comprising:
a screen for displaying contents of recognized commodities for customer confirmation.

8. An information processing method by a commodities registration apparatus comprising a first weighing machine which measures a first weight as a total weight of commodities placed on a placement area, and a second weighing machine which measures a second weight as a total weight of registered commodities, comprising:
recognizing commodities placed on the placement area; and
registering commodities recognized by the recognizing module as purchased commodities in response to a weight change amount of the second weight since the commodities are recognized by the recognizing module and the first weight when the commodities are recognized by the recognizing module are in a predetermined relationship after the commodities placed on the placement area are recognized by the recognizing module and the first weighing machine is in a standby state in which no measurement of the commodity is made.

9. The information processing method according to claim 8, further comprising:
generating a receipt containing a list of commodities.

10. The information processing method according to claim 8 or 9, further comprising:
displaying contents of recognized commodities on a screen for customer confirmation.

11. The information processing method according to any one of claims 8 to 10, further comprising:
recognizing each of a plurality of commodities placed on the placement area, and
registering all of the plurality of commodities recognized as purchased commodities in response to the weight change amount and the first weight when the commodities are recognized are in a predetermined relationship.

12. The information processing method according to any one of claims 8 to 11, further comprising:
recognizing the commodity based on features of an appearance of the commodity placed on the placement area.

13. The information processing method according to any one of claims 8 to 12, wherein recognizing comprises using a scanner.

14. The information processing method according to any one of claims 8 to 13, wherein recognizing comprises using image data and object recognition processing.

15. A non-transitory computer readable medium storing a program causing a computer to execute the information processing method according to any one of claims 8 to 14.
